## Europäisches Patentamt

## European Patent Office

## Office européen des brevets

(19)

(11) Veröffentlichungsnummer : **0 084 632**
**B1**

(12) **EUROPÄISCHE PATENTSCHRIFT**

(45) Veröffentlichungstag der Patentschrift :
26.03.86

(21) Anmeldenummer : **82111212.5**

(22) Anmeldetag : **03.12.82**

(51) Int. Cl.⁴ : **H 04 Q   1/14**

(54) **Modulare Anschlussleiste.**

(30) Priorität : **22.01.82 DE 3201894**

(43) Veröffentlichungstag der Anmeldung :
**03.08.83 Patentblatt 83/31**

(45) Bekanntmachung des Hinweises auf die Patenterteilung : **26.03.86 Patentblatt 86/13**

(84) Benannte Vertragsstaaten :
**AT BE CH FR IT LI LU NL SE**

(56) Entgegenhaltungen :
**DE-A- 3 020 516**
**FR-A- 2 309 995**

(73) Patentinhaber : **KRONE GmbH**
**Goerzallee 311**
**D-1000 Berlin 37 (DE)**

(72) Erfinder : **Forberg, Horst**
**Rätikonweg 9a**
**D-1000 Berlin 42 (DE)**
Erfinder : **Hegner, Gunter**
**Moränenweg 23**
**D-1000 Berlin 27 (DE)**
Erfinder : **Achtnig, Peter**
**Ostpreussendamm 106a**
**D-1000 Berlin 45 (DE)**
Erfinder : **Delakowitz, Bernd**
**Waidmannsluster Damm 40**
**D-1000 Berlin 27 (DE)**

(74) Vertreter : **Patentanwälte Beetz sen. - Beetz jun.**
**Timpe - Siegfried - Schmitt-Fumian**
**Steinsdorfstrasse 10**
**D-8000 München 22 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine Anschlußleiste mit 20 Kabeladern für Geräte der Fernmeldetechnik, insbesondere zur Anwendung in Hauptverteileranlagen, mit modularem Aufbau und untereinander austauschbaren Schalteinschüben für jeweils zwei Kabeladern mit der jeweiligen schalttechnischen Aufgabe angepaßten Funktionen.

Eine solche Anschlußleiste ist aus der DE-A-3 020 516 bei einem Verteiler für Telefonzentralen, insbesondere einem Kabelendverschluß mit Schutzeinrichtung, bekannt, wobei modulare Anschlußblöcke aus Isoliermaterial mit Erdungselementen und Schaltverbindungsorgan-Paaren sowie je ein in jeden Anschlußblock einsteckbarer Schutzmodul vorgesehen sind.

Andererseits ist aus der FR-A-2 309 995 ein Kontaktsegment für Trenn- und Anschlußleisten in Telefonzentralen bekannt, das aus einem Kontaktfedern-Aufnahmeteil und einem damit verbundenen Kassettenteil besteht, wobei der Kontaktfedern-Aufnahmeteil im Kassettenteil durch Rasthaken befestigt ist, die in Öffnungen der Seitenwände des Kassettenteils einrasten, und Ansätze zum Halten des Kontaktsegments in einem Verteilergerüst aufweist.

Der Erfindung liegt die Aufgabe zugrunde, eine Anschlußleiste der eingangs genannten Art in ihrer Bauweise montagefreundlicher, preisgünstiger und platzsparender zu gestalten und gemischten Betrieb unterschiedlicher Funktionsweisen je zweier Kabeladern im Verbund einer 10 Doppelanschluß-Leiste mit individueller Fehlerzustandsmeldung zuzulassen, wobei es ermöglicht werden soll, eine Anschlußleiste von 10 Doppelanschlüssen mit unterschiedlichen Schaltfunktionen für jeweils zwei Kabeladern auszurüsten bzw. die sich ergebenden Fehlerzustände über Signaleinrichtungen an eine zentrale Stelle zu melden.

Diese Aufgabe wird erfindungsgemäß dadurch gelöst, daß die Anschlußleiste bedarfsweise aus einer oberen Teilleiste zum Anschluß abgehender Kabeladern, einer mittleren Teilleiste zum Anschluß ankommender Kabeladern, einer unteren Teilleiste zum Anschluß von Signal- und Erdleitungen und den austauschbaren Schalteinschüben zusammengesetzt ist.

Ausgestaltungen der Erfindung sind in den Unteransprüchen gekennzeichnet.

Zu den genannten Funktionen gehören neben der im normalen Betriebsfall starren Durchverbindung der jeweils zwei Kabeladern insbesondere die Schalteinschübe mit Überspannungsschutz- und Stromschutzeinrichtungen sowie die bedarfsweisen Einbauten einer Adertrennung von außen und der Abgreifkontakt für Meß- und Prüfanschlüsse.

Bei den Schalteinschüben mit Überspannungsschutz- und Stromschutzeinrichtungen erfolgen im Fehlerfall eine Abschaltung der Durchverbindung und Erdung sowie über ein Kontaktpaar die Fehlerzustandsmeldung.

Die obere und die mittlere Teilleiste sind prinzipiell von identischer Bauart. Sie können nach Wunsch mit löt-, schraub- und abisolierfreien Kontakten mit polytropem Luft-Spalt — kurzgenannt LSA-PLUS — Einfach- oder LSA-PLUS-Doppelkontakten je Kabelader bestückt werden. Doppelkontakte finden Verwendung, wenn beispielsweise auf der abgehenden Kabeladernseite Umschaltungen ohne Unterbrechung des bestehenden Leitungsweges vorgenommen werden sollen.

Zur zeitsparenden Montage (und Demontage) sind die obere und die mittlere Teilleiste mit Rastvorrichtungen versehen, die eine lösbare Befestigung in einer an sich bekannten wannenförmigen Aufnahmevorrichtung gestatten, die mit einer Kabeladern-Sortiereinrichtung ausgerüstet ist.

Der Aufbau und die Funktionen der erfindungsgemäßen Anschlußleiste werden nachstehend im einzelnen anhand der Figuren erläutert. So zeigt die

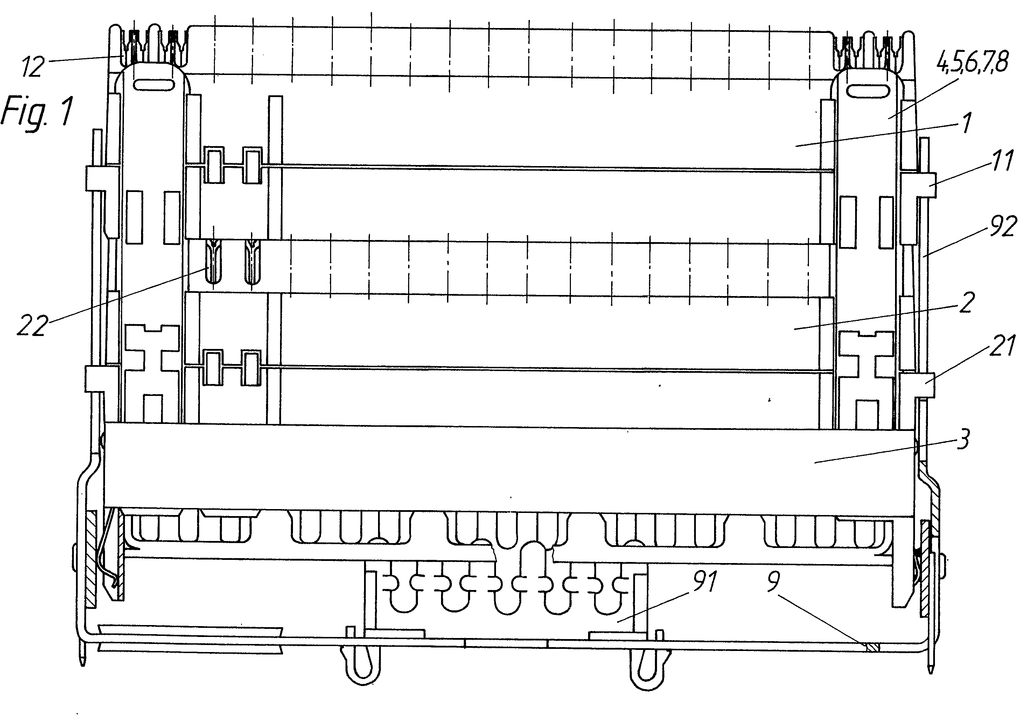

Figur 1 eine Seitenansicht der aus den drei Teilleisten 1, 2 und 3 zusammengesetzten Anschlußleiste, die mit den Rasteinrichtungen 11 und 21 auf die Zunge 92 der wannenförmigen Aufnahmevorrichtung 9 aufgerastet ist, wobei die obere Teilleiste 1 ausführungsweise mit LSA-PLUS-Doppelkontakten 12 und die mittlere Teilleiste 2 mit LSA-PLUS-Einfachkontakten 22 ausgerüstet sind. Unter der Teilleiste 3 ist die Kabeladersortiereinrichtung 91 erkennbar ; und die

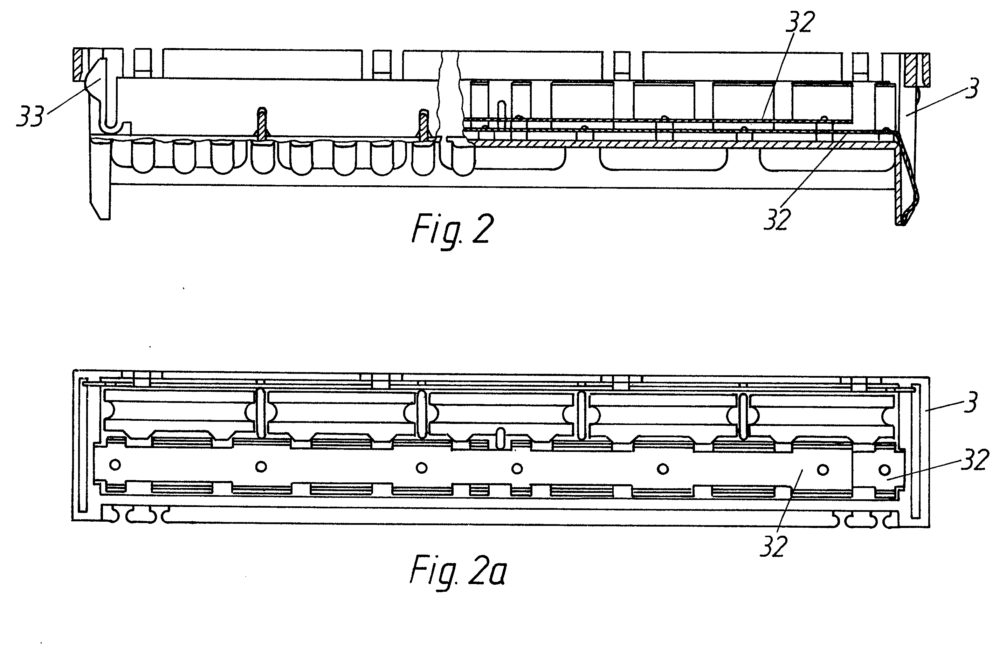

Figur 2 zeigt die Seitenansicht der unteren Teilleiste 3 in zwei Schnittebenen, die die Signalleitungen 32 und die Erdleitung 33 erkennen lassen, wobei die

Figur 2a — als Draufsicht der Fig. 2 — die Ausbildung der Signalleitungen 32 erkennen läßt ;

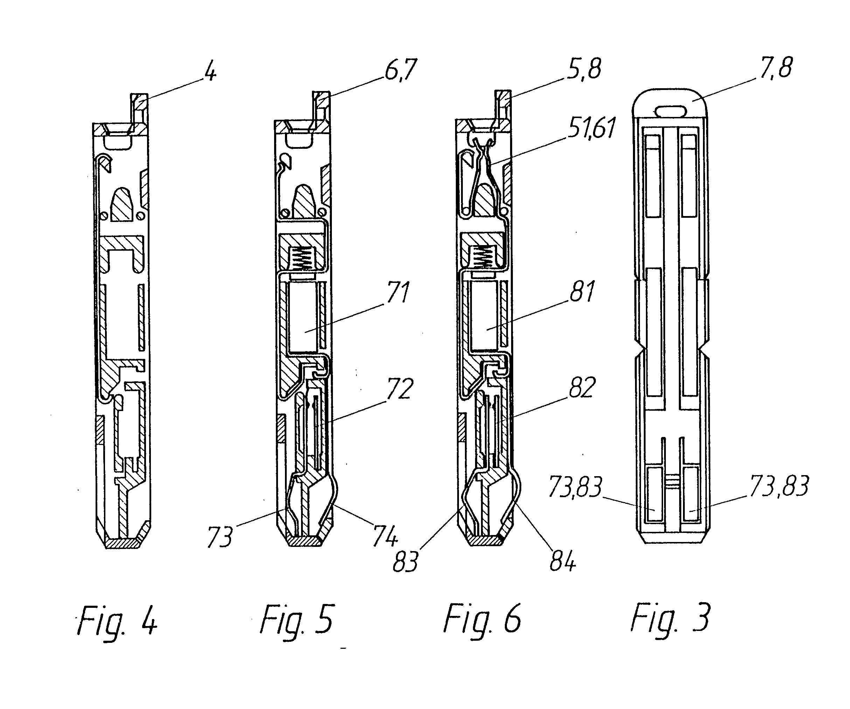

Figur 3 zeigt die Draufsicht auf einen Schalteinschub 7, 8, wobei insbesondere die Signalkontakte 73, 83 erkennbar sind ;

Figur 4 zeigt einen Schalteinschub 4 in der Seitenansicht im Schnitt ;

Figur 5 zeigt einen Schalteinschub 7, 6 in der Seitenansicht im Schnitt mit einer Überspannungsschutzeinrichtung 71, dem Kontaktpaar 72, einem Signalkontakt 73 und dem Erdkontakt 74 ; und

Figur 6 zeigt einen Schalteinschub 8, 5 in der Seitenansicht im Schnitt mit einer Trenneinrichtung 51, einem Abgreifkontakt 61, einer Stromschutzeinrichtung 81, dem Kontaktpaar 82, einem Signalkontakt 83 und dem Erdkontakt 84.

**Patentansprüche**

1. Anschlußleiste mit 20 Kabeladern für Geräte der Fernmeldetechnik, insbesondere zur Anwendung in Hauptverteileranlagen, mit modularem Aufbau und untereinander austauschbaren Schalteinschüben (4, 5, 6, 7, 8) für jeweils zwei Kabeladern mit der jeweiligen schalttechnischen Aufgabe angepaßten Funktionen, dadurch gekennzeichnet, daß die Anschlußleiste bedarfsweise aus einer oberen Teilleiste (1) zum Anschluß abgehender Kabeladern, einer mittleren Teilleiste (2) zum Anschluß ankommender Kabeladern, einer unteren Teilleiste (3) zum Anschluß von Signal- und Erdleitungen und den austauschbaren Schalteinschüben (4, 5, 6, 7, 8) zusammengesetzt ist.

2. Anschlußleiste nach Anspruch 1, dadurch gekennzeichnet, daß die obere Teilleiste (1) und die mittlere Teilleiste (2) bedarfsweise mit LSA-PLUS-Einfachkontakten (22) oder LSA-PLUS-Doppelkontakten (12) ausrüstbar sind.

3. Anschlußleiste nach Anspruch 1, dadurch gekennzeichnet, daß die obere Teilleiste (1) und die mittlere Teilleiste (2) identische Bauteile darstellen.

4. Anschlußleiste nach Anspruch 1, dadurch gekennzeichnet, daß die untere Teilleiste (3) aufgesteckt, die mittlere Teilleiste (2) und die obere Teilleiste (1) — in dieser Reihenfolge — mit ihren Rasteinrichtungen (21, 11) auf Zungen (92) einer wannenförmigen Aufnahmevorrichtung (9) aufgerastet werden, die mit einer Kabeladern-Sortiereinrichtung (91) ausgerüstet ist.

5. Anschlußleiste nach Anspruch 1, dadurch gekennzeichnet, daß Schalteinschübe (4) zur starren Durchverbindung der zwei Kabeladern verwendbar sind.

6. Anschlußleiste nach Anspruch 1, dadurch gekennzeichnet, daß Schalteinschübe (5, 6) zur abschaltbaren Durchverbindung der zwei Kabeladern mit Trenneinrichtung (51) und Abgreifkontakt (61) verwendbar sind.

7. Anschlußleiste nach Anspruch 1, dadurch gekennzeichnet, daß Schalteinschübe (7) zur abschaltbaren Durchverbindung der zwei Kabeladern vermittels einer Überspannungsschutzeinrichtung (71) verwendbar sind, die ein Kontaktpaar (72) zur Fehlerzustandsmeldung enthalten.

8. Anschlußleiste nach Anspruch 1, dadurch gekennzeichnet, daß Schalteinschübe (7, 5, 6) zur abschaltbaren Durchverbindung der zwei Kabeladern vermittels einer Überspannungsschutzeinrichtung (71) mit Trenneinrichtung (51) und Abgreifkontakt (61) verwendbar sind, die ein Kontaktpaar (72) zur Fehlerzustandsmeldung enthalten.

9. Anschlußleiste nach Anspruch 1, dadurch gekennzeichnet, daß Schalteinschübe (8) zur abschaltbaren Durchverbindung der zwei Kabeladern vermittels einer Stromschutzeinrichtung (81) verwendbar sind, die ein Kontaktpaar (82) zur Fehlerzustandsmeldung enthalten.

10. Anschlußleiste nach Anspruch 1, dadurch gekennzeichnet, daß Schalteinschübe (8, 5, 6) zur abschaltbaren Durchverbindung der zwei Kabeladern vermittels einer Stromschutzeinrichtung (81) mit Trenneinrichtung (51) und Abgreifkontakt (61) verwendbar sind, die ein Kontaktpaar (82) zur Fehlerzustandsmeldung enthalten.

11. Anschlußleiste nach einem der Ansprüche 7 bis 10, dadurch gekennzeichnet, daß Schalteinschübe (7, 8) über Signalkontakte (73, 83) mit den Signalleitungen (32) und der Erdleitung (33) in der unteren Teilleiste (3) verbindbar sind.

12. Anschlußleiste nach einem der Ansprüche 5 bis 10, dadurch gekennzeichnet, daß Schalteinschübe (4, 5, 6, 7, 8) in einer Anschlußleiste mit gemischten Funktionen betreibbar sind.

## Claims

1. A connecting strip including 20 cable conductors for use with telecommunication devices, especially for use in trunk distributing frame systems, said connecting strip having modular structure and comprising mutually interchangeable switching plug-in units (4, 5, 6, 7, 8) for two respective cable conductors with functions adapted to the respective connecting task, characterised in that the connecting strip is composed, as required, of a top partial strip (1) for the termination of outgoing cable conductors, a central partial strip (2) for the termination of incoming cable conductors, a bottom partial strip (3) for the termination of signal and ground conductors, and of the interchangeable switching plug-in units (4, 5, 6, 7, 8).

2. A connecting strip as claimed in claim 1, characterised in that the top partial strip (1) and the central partial strip (2) may be equipped, as required, with LSA-PLUS single contacts (22) or LSA-PLUS double contacts (12).

3. A connecting strip as claimed in claim 1, characterised in that the top partial strip (1) and the central partial strip (2) constitute identical components.

4. A connecting strip as claimed in claim 1, characterised in that the bottom partial strip (3) is adapted to be pushed in place, and the central partial strip (2) and the top partial strip (1) — in this order — are latched with their latching means (21, 11) onto tabs (92) of a trough-like receiving panel (9) which is equipped with a cable conductor sorting means (91).

5. A connecting strip as claimed in claim 1, characterised in that switching plug-in units (4) may be employed for rigid through-connection of the two cable conductors.

6. A connecting strip as claimed in claim 1, characterised in that switching plug-in units (5, 6) may be employed for the disconnectible through-connection of the two cable conductors including breaking means (51) and tapping contact (61).

7. A connecting strip as claimed in claim 1, characterised in that switching plug-in units (7) may be employed for the disconnectible through-connection of the two cable conductors by means of overvoltage protection means (71) including a contact pair (72) for fault signalling.

8. A connecting strip as claimed in claim 1, characterised in that switching plug-in units (7, 5, 6) for disconnectible through-connection of the two cable conductors by means of an overvoltage protection means (71) including breaking means (51) and tapping contact (61) may be used which comprise a contact pair (72) for fault signalling.

9. A connecting strip as claimed in claim 1, characterised in that switching plug-in units (8) for disconnectible through-connection of the two cable conductors by means of current protection means (81) may be used which comprise a pair of contacts (82) for fault signalling.

10. A connecting strip as claimed in claim 1, characterised in that switching plug-in units (8, 5, 6) for disconnectible through-connection of the two cable conductors by means of current protection means (81) including breaking means (51) and tapping contact (61) may be used which comprise a pair of contacts (82) for fault signalling.

11. A connecting strip as claimed in any of the claims 7 to 10, characterised in that switching plug-in units (7, 8) are adapted to be connected via signal contacts (73, 83) to the signal lines (32) and the ground line (33) in the bottom partial strip (3).

12. A connecting strip as claimed in any of the claims 5 to 10, characterised in that switching plug-in units (4, 5, 6, 7, 8) may be operated in a connecting strip with mixed functions.

**Revendications**

1. Réglette de connexion à 20 conducteurs ou fils de câble pour appareils de télécommunication, destinée à être utilisée en particulier dans les installations de répartiteurs généraux, présentant une construction modulaire et des éléments de commutation insérés et interchangeables pour chaque fois deux fils de câble, ayant des fonctions adaptées à l'opération de commutation à accomplir chaque fois, caractérisée en ce que la réglette est composée, selon les besoins, d'une partie supérieure (1) pour la connexion de fils de câble sortants, d'une partie centrale (2) pour la connexion de fils de câble arrivants, d'une partie inférieure (3) pour la connexion de lignes de signalisation et de terre, ainsi que des éléments de commutation insérés et interchangeables (4, 5, 6, 7, 8).

2. Réglette selon la revendication 1, caractérisée en ce que la partie supérieure (1) et la partie centrale (2) de la réglette peuvent être équipées, selon les besoins, de contacts LSA-PLUS-simples (22) ou de contacts LSA-PLUS-doubles (12).

3. Réglette selon la revendication 1, caractérisée en ce que la partie supérieure (1) et la partie centrale (2) de la réglette sont des pièces identiques.

4. Réglette selon la revendication 1, caractérisée en ce que la partie inférieure (3) de la réglette est mise en place par emboîtement et la partie centrale (2) et la partie supérieure (1) de la réglette sont — dans cet ordre — encliquetées avec leurs dispositifs d'arrêt (21, 11) sur des languettes (92) d'un dispositif de réception (9) en forme de cuvette, qui est équipé d'un dispositif de triage de fils de câble (91).

5. Réglette selon la revendication 1, caractérisée en ce que les éléments de commutation insérés (4) sont utilisables pour établir des connexions rigides entre deux fils de câble.

6. Réglette selon la revendication 1, caractérisée en ce que les éléments de commutation insérés (5, 6) sont utilisables pour établir une connexion pouvant être sectionnée entre deux fils de câble, les éléments présentant à cet effet un dispositif de sectionnement (51) et un contact de prise (61).

7. Réglette selon la revendication 1, caractérisée en ce qu'elle permet d'utiliser des éléments de commutation insérés (7) pour établir entre deux fils de câble une connexion susceptible d'être sectionnée au moyen d'un dispositif (71) de protection contre les surtensions, les éléments de commutation contenant une paire de contacts (72) pour l'indication de l'état de dérangement.

8. Réglette selon la revendication 1, caractérisée en ce qu'elle permet l'utilisation d'éléments de commutation insérés (7, 5, 6) pour établir entre deux fils de câble une connexion susceptible d'être sectionnée au moyen d'un dispositif (71) de protection contre les surtensions, possédant un dispositif de sectionnement (51) et un contact de prise (61), qui contiennent une paire de contacts (72) pour l'indication de l'état de dérangement.

9. Réglette selon la revendication 1, caractérisée en ce qu'elle permet l'utilisation d'éléments de commutation insérés (8) pour établir entre deux fils de câble une connexion susceptible d'être sectionnée au moyen d'un dispositif (81) de protection contre les surintensités, les éléments de commutation contenant une paire de contacts (82) pour l'indication de l'état de dérangement.

10. Réglette selon la revendication 1, caractérisée en ce qu'elle permet l'utilisation d'éléments de commutation insérés (8, 5, 6) pour l'établissement entre deux fils de câble d'une connexion susceptible d'être sectionnée par un dispositif (81) de protection contre les surintensités, possédant un dispositif de sectionnement (51) et un contact de prise (61), les éléments de commutation contenant une paire de contacts (82) pour l'indication de l'état de dérangement.

11. Réglette selon une des revendications 7 à 10, caractérisée en ce que les éléments de commutation insérés (7, 8) peuvent être reliés à travers des contacts de signalisation (73, 83) aux lignes de signalisation (32) et à la ligne de terre (33) dans la partie inférieure (3) de la réglette.

12. Réglette selon une des revendications 5 à 10, caractérisée en ce qu'elle permet de faire fonctionner des éléments de commutation insérés (4, 5, 6, 7, 8) à fonctions mixtes dans une même réglette.

Fig. 1

Fig. 2

Fig. 2a

Fig. 4    Fig. 5    Fig. 6    Fig. 3

0 084 632